# EUROPÄISCHE PATENTSCHRIFT

(11) **EP 3 172 417 B1**
(45) Veröffentlichungstag und Bekanntmachung des Hinweises auf die Patenterteilung: **27.12.2017**
(21) Anmeldenummer: 15757117.5
(22) Anmeldetag: 15.07.2015
(51) Int. Cl.: F01N 9/00, F02D 41/14

(54) **VERFAHREN ZUR BESTIMMUNG DES DRUCKES IN DER ABGASANLAGE EINER BRENNKRAFTMASCHINE**
METHOD OF DETERMINING THE PRESSURE IN THE EXHAUST SYSTEM OF AN INTERNAL COMBUSTION ENGINE
PROCÉDÉ POUR DÉTERMINER LA PRESSION DANS L'ÉCHAPPEMENT D'UN MOTEUR A COMBUSTION INTERNE

(30) Priorität: 21.07.2014 DE 102014010623
(43) Veröffentlichungstag der Anmeldung: 31.05.2017
(73) Patentinhaber: IAV GmbH Ingenieurgesellschaft Auto und Verkehr, 10587 Berlin (DE)
(72) Erfinder: GURLO, Aleksander, 38518 Gifhorn (DE)
(74) Vertreter: Fukala, Georg
(86) Internationale Anmeldenummer: PCT/DE2015/100302
(87) Internationale Veröffentlichungsnummer: WO 2016/012005

(56) Entgegenhaltungen:
- DE-A1- 10 230 830
- DE-A1-102006 006 114
- DE-A1-102011 088 296
- FR-B1- 2 893 979

## Beschreibung

Die vorliegende Erfindung betrifft ein Verfahren zur Bestimmung des Druckes in der Abgasanlage einer Brennkraftmaschine mit den Merkmalen gemäß Patentanspruch 1.

Zur Bestimmung des Druckes in der Abgasanlage einer Brennkraftmaschine ist es beispielsweise gemäß der DE102008044313A1 Stand der Technik, die Solltemperatur einer Breitband-Lambdasonde zu modulieren und aus der Temperaturabhängigkeit des resultierenden Pumpstroms auf den Abgas-Gesamtdruck zu schließen, so dass kein Modell oder kein weiterer Drucksensor erforderlich ist. Auch wenn hierbei eine bestehende Sonde verwendet wird, ist es von Nachteil, dass in die Steuerung/Regelung der Sonde eingegriffen wird, d. h. es ist ein vergleichsweise hoher Entwicklungsaufwand sowie eine Absicherung der Funktionen für eine Serienanwendung notwendig. Gemäß der FR2893979B1, der DE102013210762A1 sowie der WO2014120070A1 ist es Stand der Technik, den Druck in der Abgasanlage einer Brennkraftmaschine in Abhängigkeit des Signals einer ersten und einer zweiten Lambdasonde zu bestimmen.

Es ist Aufgabe der vorliegenden Erfindung, eine Bestimmung des Druckes in der Abgasanlage einer Brennkraftmaschine möglichst wenig aufwendig zu gestalten.

Diese Aufgabe wird erfindungsgemäß dadurch gelöst, dass der Druck des Abgases in der Abgasanlage einer Brennkraftmaschine in Abhängigkeit des Signals einer ersten Lambdasonde und des Signals einer zweiten Lambdasonde bestimmt wird, wobei die erste Lambdasonde eine Breitband-Lambdasonde ist und die zweite Lambdasonde eine Spannungs-Sprung-Lambdasonde ist. Insbesondere wird dabei einem Signalwert der ersten Lambdasonde und einem Signalwert der zweiten Lambdasonde ein Wert zugeordnet, der den Druck in der Abgasanlage einer Brennkraftmaschine repräsentiert. D. h. der vorliegenden Erfindung liegt die Erkenntnis zu Grunde, dass zwischen den Signalwerten der ersten Lambdasonde und den Signalwerten der zweiten Lambdasonde und dem Druck in der Abgasanlage eine Beziehung bzw. eine Korrelation besteht. Also der Druck in der Abgasanlage ist eine Funktion des Signals einer ersten Lambdasonde und des Signals einer zweiten Lambdasonde. Erfindungsgemäß vorteilhaft werden nur vorhandene Sonden verwendet, ein Eingriff in die Steuerung/Regelung der Sonden ist nicht erforderlich. Um beispielsweise eine Tabelle mit dem Zusammenhang zwischen dem Signal der ersten und dem Signal der zweiten Lambdasonde sowie dem Druck in der Abgasanlage zu erstellen, ist es lediglich notwendig, während des Betriebs einer Brennkraftmaschine, etwa bei deren Entwicklung, d. h. in einer Entwicklungsphase der Brennkraftmaschine, den Druck in der Abgasanlage, also insbesondere den Abgasmassenstrom, sowie das Verbrennungsluftverhältnis zu variieren und diese Werte neben Signalwerten einer ersten und Signalwerten einer zweiten Lambdasonde, die in der Abgasanlage angeordnet sind, zu erfassen. Diese Tabelle bzw. dieses Kennfeld kann dann in einer an die Entwicklungsphase anschließenden Nutzungsphase der Brennkraftmaschine dem Betrieb der Brennkraftmaschine zu Grunde gelegt werden, also insbesondere in einem so genannten Steuergerät abgelegt werden, so dass auf Basis der Signalwerte der ersten und der Signalwerte einer zweiten Lambdasonde bestimmt werden kann, was für ein Druckwert in der Abgasanlage vorherrscht.

Weitere vorteilhafte Ausführungen sind dem folgenden detaillierten Beispiel zu entnehmen.

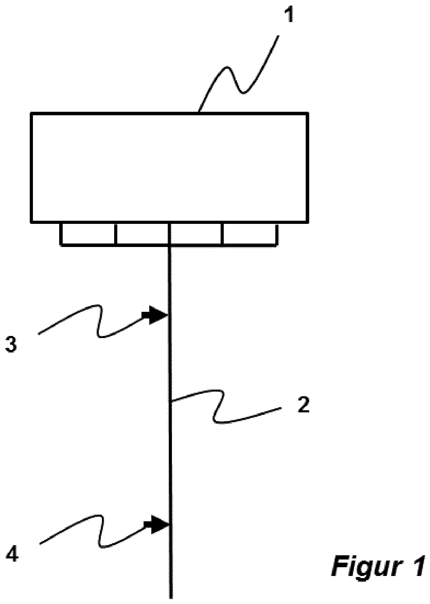

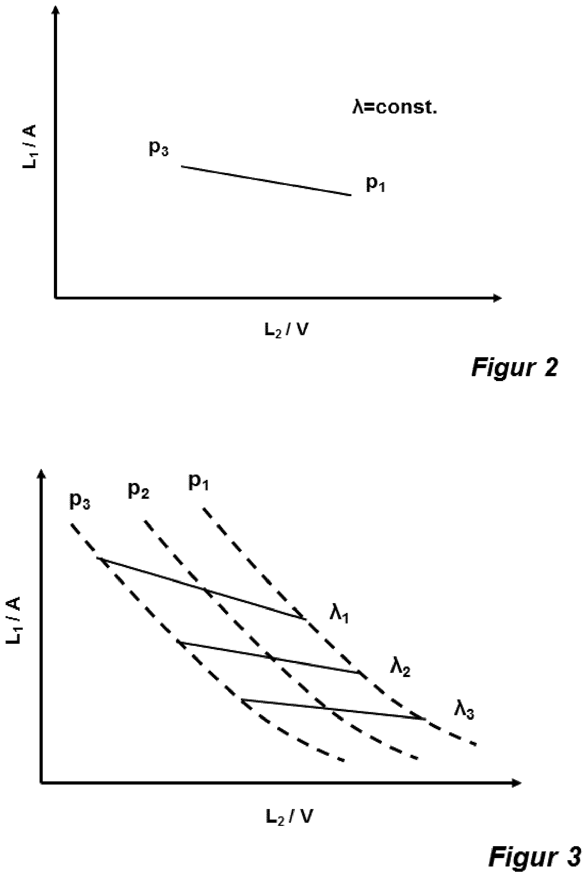

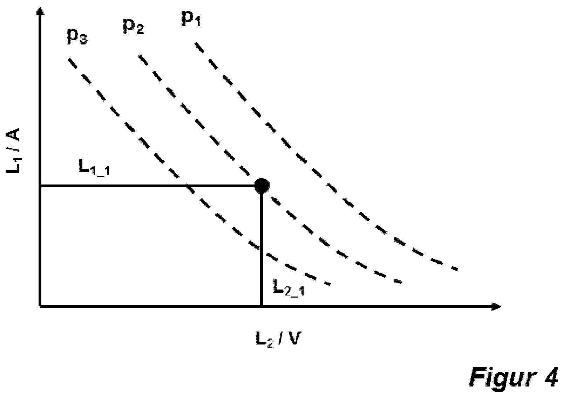

Wie in Figur 1 gezeigt, weist eine Brennkraftmaschine 1 eine Abgasanlage/-leitung 2 auf. In der Abgasanlage 2 ist eine erste Lambdasonde 3 angeordnet. In der Abgasanlage 2 ist weiterhin eine zweite Lambdasonde 4 angeordnet. Die erste Lambdasonde 3 und die zweite Lambdasonde 4 stehen natürlich entsprechend ihrer Zweckbestimmung in Kontakt mit dem Abgas der Brennkraftmaschine 1. Die erste Lambdasonde 3 ist z. B. vergleichsweise nahe der Brennkraftmaschine 1 in der Abgasanlage 2 angeordnet und die zweite Lambdasonde 4 ist z. B. vergleichsweise fern der Brennkraftmaschine 1 in der Abgasanlage 2 angeordnet. D. h. die erste Lambdasonde 3 entspricht einer so genannten Regelsonde, die möglichst nah an der Verbrennung dran sein soll und die zweite Lambdasonde 4 entspricht einer so genannten Führungssonde, die entfernt der Verbrennung sein soll. Natürlich können in der Abgasanlage 2 auch weitere bekannte Bauteile bzw. Kombinationen davon angeordnet sein, wie ein oder mehrere Katalysatoren und/oder Partikelfilter und/oder Abgasturbinen (jeweils nicht gezeigt). Beispielsweise ist stromab der ersten Lambdasonde 3 und stromab der zweiten Lambdasonde 4 zumindest ein Katalysator und/oder zumindest ein Partikelfilter und/oder zumindest eine Abgasturbine in der Abgasanlage 2 angeordnet. Oder beispielsweise ist stromab der ersten Lambdasonde 3, aber stromauf der zweiten Lambdasonde 4, zumindest ein Katalysator und/oder zumindest ein Partikelfilter und/oder zumindest eine Abgasturbine in der Abgasanlage 2 angeordnet. Oder beispielsweise ist stromauf der ersten Lambdasonde 3 und stromauf der zweiten Lambdasonde 4 zumindest ein Katalysator und/oder zumindest ein Partikelfilter und/oder zumindest eine Abgasturbine in der Abgasanlage 2 angeordnet. Die erste Lambdasonde 3 ist eine so genannte Breitband-Lambdasonde 3, auch bekannt als stetige oder lineare Lambdasonde 3, mit der der Anteil an Sauerstoff im Abgas bzw. das Verbrennungsluftverhältnis λ beim Betrieb der Brennkraftmaschine 1 ermittelt wird. Wie allgemein bekannt, wird dabei ein so genannter Pumpstrom Iₚ zur Bestimmung des Anteils an Sauerstoff im Abgas bzw. des Verbrennungsluftverhältnisses λ bzw. der Luftzahl beim Betrieb der Brennkraftmaschine 1 herangezogen. D. h. es erfolgt eine Umrechnung des Pumpstroms Iₚ, beispielsweise in Verbindung mit einer vordefinierten Kennlinie, in einen Istwert, betreffend das Verbrennungsluftverhältnis λ bzw. Lambda. Die zweite Lambdasonde 4 ist eine so genannte Spannungs-Sprung- oder Zweipunkt-Lambdasonde 4. Wie allgemein bekannt, wird dabei eine zwischen zwei Elektroden, insbesondere einer inneren und einer äußeren Elektrode, ermittelte bzw. anliegende elektrische Spannung (Sonden-Spannung) zur Bestimmung des Anteils an Sauerstoff im Abgas bzw. des Verbrennungsluftverhältnisses λ bzw. der Luftzahl beim Betrieb der Brennkraftmaschine 1 herangezogen. Erfindungsgemäß werden nun das Signal der ersten Lambdasonde 3, also insbesondere der Pumpstrom Iₚ oder das daraus berechnete Verbrennungsluftverhältnis λ und das Signal der zweiten Lambdasonde 4, also insbesondere die zwischen einer inneren und einer äußeren Elektrode ermittelte Spannung Uₛ (Sonden-Spannung) herangezogen, um den Druck p in der Abgasanlage 2 zu bestimmen. Insbesondere hat sich gezeigt, dass zwischen den Signalwerten L₁ der ersten Lambdasonde 3 und den Signalwerten L₂ der zweiten Lambdasonde 4 und Druckwerten p in der Abgasanlage 2 eine Beziehung bzw. eine Korrelation besteht. Also der Druck p in der Abgasanlage 2 ist eine Funktion des Signals L₁ einer ersten Lambdasonde 3 und des Signals L₂ einer zweiten Lambdasonde 4. Hierzu sei auf Figur 2 verwiesen. Hier ist beispielhaft der Verlauf des Druckes p in der Abgasanlage 2 als Funktion des Signals L₁ der ersten Lambdasonde 3 und des Signals L₂ der zweiten Lambdasonde 4 gezeigt, d. h. p = f (L₁, L₂). Insbesondere sind zwei Druckwerte p₁ und p₃ gezeigt, nämlich der Anfangs- und der Endpunkt der Geraden in Figur 2, wobei p₁ kleiner ist als p₃, beispielsweise ist p₁ = 1.0 bar und p₃ = 2.3 bar. Diese zwei Druckwerte p₁ und p₃ entsprechen insbesondere dem Druck p eines Modellabgases in einer Messkammer, welcher im Zusammenhang mit einem Experiment variiert wird, wobei das Modellabgas einen bestimmten Anteil an Sauerstoff enthält, also ein bestimmtes Verbrennungsluftverhältnis λ vorliegt. D. h. das Verbrennungsluftverhältnis λ wird konstant gehalten und der Druck p des Modellabgases wird variiert. Insbesondere ist das Verbrennungsluftverhältnis λ größer oder gleich eins (≥1.0), d. h. es herrscht ein stöchiometrisches oder überstöchiometrisches Verbrennungsluftverhältnis λ. Sowohl die erste Lambdasonde 3 als auch die zweite Lambdasonde 4 stehen im Kontakt mit dem Modellabgas bzw. sind so in der Messkammer angeordnet, dass dieser Kontakt möglich ist. Jedenfalls kann anhand eines solchen Experiments nachgewiesen werden, dass der genannte Zusammenhang zwischen Druck p, dem Signal L₁ der ersten Lambdasonde 3 und dem Signal der zweiten L₂ Lambdasonde 4 besteht, angenommen, das Verbrennungsluftverhältnis λ ist konstant. D. h. steigt der Druck p im Abgas bzw. in der Abgasanlage 2 ausgehend von dem Druckwert p₁ auf den Druckwert p₃, dann steigt auch das Signal L₁ der ersten Lambdasonde 3, d. h. der Pumpstrom Iₚ (in Ampere/A) nimmt größere Werte an, wobei sich das Signal L₂ der zweiten Lambdasonde 4 umgekehrt verhält, also die Sonden-Spannung Uₛ (in Volt/V) sinkt mit steigendem Druck p. Auf diese Weise steht für ein konstantes Verbrennungsluftverhältnis λ ein Zusammenhang bereit, anhand dessen in Abhängigkeit des Signals L₁ einer ersten Lambdasonde 3 und des Signals L₂ einer zweiten Lambdasonde 4 der Druck p des Abgases in der Abgasanlage 2 einer Brennkraftmaschine 1 ermittelt werden kann. Im Rahmen eines Experiments, wie oben beschrieben, wird nun eine Variation des Druckes p eines Modellabgases in einer Messkammer oder aber im Rahmen der Entwicklung einer Brennkraftmaschine 1 in Verbindung mit einem Prüfstand eine Variation des Druckes p des realen Abgases, insbesondere durch eine Variation des Abgasmassenstroms in der Abgasanlage 2 bzw. dem Abgasrohr der Brennkraftmaschine 1, bei unterschiedlichen Verbrennungsluftverhältnissen λ₁ bis λ₃ vorgenommen, so dass ein Kennfeld erstellt werden kann, wie in Figur 3 gezeigt, wobei beispielsweise λ₁ = 1.01, λ₂ = 1.05 und λ₃ = 1,10 ist. D. h. es besteht die Möglichkeit, Isobaren zu bilden, die den Druck p des Abgases betreffen, also Linien gleichen Druckes pₙ, welche den Zusammenhang zwischen dem Signal L₁ einer ersten Lambdasonde 3 und dem Signal L₂ einer zweiten Lambdasonde 4 sowie dem Druck p des Abgases in der Abgasanlage 2 repräsentieren. D. h. die so gewonnene Beziehung kann nun in einem Kennfeld in einem Steuergerät bzw. einer Tabelle abgelegt werden. Anhand dieses Kennfeldes bzw. dieser Tabelle wird auch dann, wenn das tatsächliche Verbrennungsluftverhältnis λ nicht bekannt ist, dem Signal L₁ einer ersten Lambdasonde 3 und dem Signal L₂ einer zweiten Lambdasonde 4 ein Druckwert p des Abgases zugeordnet. Wie in Figur 4 gezeigt, weist das Kennfeld zwei Eingangsgrößen/Argumente, nämlich das Signal L₁ einer ersten Lambdasonde 3 und das Signal L₂ einer zweiten Lambdasonde 4 sowie eine Ausgangsgröße/einen Funktionswert auf, nämlich den Druck p in der Abgasanlage 2 bzw. die Isobaren p₁ bis pₙ, die den funktionalen Zusammenhang zwischen dem Signal L₁ der ersten Lambdasonde 3 und dem Signal L₂ der zweiten Lambdasonde 4 sowie dem Druck p in der Abgasanlage 2 bei verschiedenen Verbrennungsluftverhältnissen λ beschreiben. D. h. wie in Figur 4 gezeigt, wird ein Signalwert L_{1_1} mittels der ersten Lambdasonde 3 (Pumpstrom Iₚ/in Ampere) ermittelt (horizontale durchgezogene Linie) und ein Signalwert L_{2_1} mittels der zweiten Lambdasonde 4 (Sonden-Spannung Uₛ/in Volt) ermittelt (vertikale durchgezogene Linie), wobei die Zuordnung eines Druckwertes p gemäß der Isobaren p₂ erfolgt, d. h. der Druck p in der Abgasanlage 2 entspricht dem während des Experiments/Versuchs, bei einem bestimmten Verbrennungsluftverhältnis λₙ, ermittelten Druck p₂, da sich die beiden durchgezogenen Linien auf der Isobaren p₂ schneiden bzw. die beiden Eingangsgrößen/Argumente dort den selben Funktionswert aufweisen, nämlich den Druck p₂. Ist beispielsweise stromab der ersten Lambdasonde 3 und stromab der zweiten Lambdasonde 4 zumindest ein Katalysator und/oder zumindest eine Abgasturbine und/oder zumindest ein Partikelfilter in der Abgasanlage 2 angeordnet, dann kann der Druck p in der Abgasanlage 2 stromauf des jeweiligen Bauteils bzw. der jeweiligen Bauteile mittels des erfindungsgemäßen Verfahrens bestimmt werden, wobei in Abhängigkeit des so bekannten Druckes p eine präzise Steuerung/Regelung des Anteils an Abgas, welcher der Brennkraftmaschine 1 zurückgeführt werden soll (AGR) erfolgen kann, wenn die dafür notwendige (nicht gezeigte) Bypass-Leitung stromauf des jeweiligen Bauteils bzw. der jeweiligen Bauteile von der Abgasanlage/-leitung 2 abzweigt und bis zur (nicht gezeigten) Ansauganlage/-leitung geführt ist (Hochdruck-AGR). Ist beispielsweise stromauf einer ersten Lambdasonde 3 und stromauf einer zweiten Lambdasonde 4 zumindest ein Katalysator und/oder zumindest eine Abgasturbine und/oder zumindest ein Partikelfilter in der Abgasanlage 2 angeordnet, dann kann der Druck p in der Abgasanlage 2 stromab des jeweiligen Bauteils bzw. der jeweiligen Bauteile mittels des erfindungsgemäßen Verfahrens bestimmt werden, wobei in Abhängigkeit des so bekannten Druckes p eine präzise Steuerung/Regelung des Anteils an Abgas, welcher der Brennkraftmaschine 1 zurückgeführt werden soll (AGR), erfolgen kann, wenn die dafür notwendige (nicht gezeigte) Bypass-Leitung stromab des jeweiligen Bauteils bzw. der jeweiligen Bauteile von der Abgasanlage/-leitung 2 abzweigt und bis zur (nicht gezeigten) Ansauganlage/-leitung geführt ist (Niederdruck-AGR). Ist beispielsweise stromab der ersten Lambdasonde 3 und stromauf der zweiten Lambdasonde 4 zumindest ein Katalysator und/oder zumindest eine Abgasturbine und/oder zumindest ein Partikelfilter in der Abgasanlage 2 angeordnet, dann kann der Druck p in der Abgasanlage 2 über dem jeweiligen Bauteil bzw. den jeweiligen Bauteilen mittels des erfindungsgemäßen Verfahrens bestimmt werden, d. h. es erfolgt quasi die Bestimmung eines mittleren Druckes p in der Abgasanlage 2 zwischen der ersten Lambdasonde 3 und der zweiten Lambdasonde 4 unter Einbeziehung des Einflusses des jeweiligen Bauteils bzw. der jeweiligen Bauteile, die dazwischen liegen. In Abhängigkeit des so bekannten mittleren Druckes p kann dann z. B. eine Steuerung/Regelung des Anteils an Abgas, welcher der Brennkraftmaschine 1 zurückgeführt werden soll (AGR), erfolgen (Hochdruck- oder Niederdruck-AGR). Natürlich kann in Abhängigkeit des mittels des erfindungsgemäßen Verfahrens bestimmten (ggf. mittleren) Druckes p in der Abgasanlage 2 auch eine Steuerung/Regelung von Abgasklappen/Strömungsleiteinrichtungen in der Abgasanlage 2 erfolgen, sei es zur Verbesserung der Abgasrückführung oder zur Beeinflussung einer Abgasturbine bzw. eines Abgasturboladers bzw. des Ladedruckes.

## Patentansprüche

1. Verfahren zur Bestimmung des Druckes (p) in der Abgasanlage (2) einer Brennkraftmaschine (1), wobei in der Abgasanlage (2) eine erste Lambdasonde (3) und eine zweite Lambdasonde (4) angeordnet ist, wobei der Druck (p) in der Abgasanlage (2) in Abhängigkeit des Signals (L₁) der ersten Lambdasonde (3) und des Signals (L₂) der zweiten Lambdasonde (4) bestimmt wird, wobei die erste Lambdasonde (3) eine Breitband-Lambdasonde ist und die zweite Lambdasonde (4) eine Spannungs-Sprung-Lambdasonde ist.

2. Verfahren nach Patentanspruch 1, wobei das Signal (L₁) der ersten Lambdasonde (3) einem Pumpstrom (Iₚ) entspricht oder in Abhängigkeit davon gebildet wird und das Signal (L₂) der zweiten Lambdasonde (4) einer Spannung (Uₛ) zwischen zwei Elektroden entspricht oder in Abhängigkeit davon gebildet wird.

3. Verfahren nach Patentanspruch 1 oder 2, wobei für die Bestimmung des Druckes (p) in der Abgasanlage (2) beim Betrieb einer Brennkraftmaschine (1) während einer Nutzungsphase der Brennkraftmaschine (1), die sich an eine Entwicklungsphase der Brennkraftmaschine (1) anschließt, in der Entwicklungsphase der Brennkraftmaschine (1) eine Variation des Druckes (p) in der Abgasanlage (2) erfolgt sowie eine Ermittlung des Signals (L₁) der ersten Lambdasonde (3) und des Signals (L₂) der zweiten Lambdasonde (4) erfolgt, so dass ein funktionaler Zusammenhang zwischen dem Druck (p) in der Abgasanlage (2), dem Signal (L₁) der ersten Lambdasonde (3) und dem Signal (L₂) der zweiten Lambdasonde (4) bereitsteht und in der Nutzungsphase in Abhängigkeit dieses funktionalen Zusammenhanges der Druck (p) in der Abgasanlage (2) anhand einer Ermittlung des Signals (Li) der ersten Lambdasonde (3) und des Signals (L₂) der zweiten Lambdasonde (4) bestimmt wird.

4. Verfahren nach Patentanspruch 3, wobei in der Entwicklungsphase der Brennkraftmaschine (1) neben der Variation des Druckes (p) in der Abgasanlage (2) sowie der Ermittlung des Signals (L₁) der ersten Lambdasonde (3) und des Signals (L₂) der zweiten Lambdasonde (4) eine Variation des Verbrennungsluftverhältnisses (λ) des Abgases erfolgt, so dass Linien gleichen Druckes (pₙ), welche den Zusammenhang zwischen dem Signal (Li) der ersten Lambdasonde (3) und dem Signal (L₂) der zweiten Lambdasonde (4) sowie dem Druck (p) des Abgases in der Abgasanlage (2) bei verschiedenen Verbrennungsluftverhältnissen (λₙ) repräsentieren, bereitstehen und in der Nutzungsphase der Brennkraftmaschine (1) anhand der Linien gleichen Druckes (pₙ) auch dann, wenn das tatsächliche Verbrennungsluftverhältnis (λ) nicht bekannt ist, sowie anhand einer Ermittlung des Signals (Li) der ersten Lambdasonde (3) und des Signals (L₂) der zweiten Lambdasonde (4), ein Druckwert (p) des Abgases bestimmt wird.

5. Verfahren nach Patentanspruch 1 bis 4, wobei die erste Lambdasonde (3) vergleichsweise nahe der Brennkraftmaschine (1) in der Abgasanlage (2) angeordnet ist und die zweite Lambdasonde (4) vergleichsweise fern der Brennkraftmaschine (1) in der Abgasanlage 2 angeordnet ist.

6. Verfahren nach Patentanspruch 1 bis 5, wobei, wenn stromab der ersten Lambdasonde (3) und stromab der zweiten Lambdasonde (4) zumindest ein Katalysator und/oder zumindest eine Abgasturbine und/oder zumindest ein Partikelfilter in der Abgasanlage (2) angeordnet ist, der Druck (p) in der Abgasanlage (2) stromauf des jeweiligen Bauteils/der jeweiligen Bauteile bestimmt wird.

7. Verfahren nach Patentanspruch 1 bis 5, wobei, wenn stromauf der ersten Lambdasonde (3) und stromauf einer zweiten Lambdasonde (4) zumindest ein Katalysator und/oder zumindest eine Abgasturbine und/oder zumindest ein Partikelfilter in der Abgasanlage (2) angeordnet ist, der Druck (p) in der Abgasanlage (2) stromab des jeweiligen Bauteils/der jeweiligen Bauteile bestimmt wird.

8. Verfahren nach Patentanspruch 1 bis 5, wobei, wenn stromab der ersten Lambdasonde (3) und stromauf der zweiten Lambdasonde (4) zumindest ein Katalysator und/oder zumindest eine Abgasturbine und/oder zumindest ein Partikelfilter in der Abgasanlage (2) angeordnet ist, der Druck (p) in der Abgasanlage (2) über dem jeweiligen Bauteil/den jeweiligen Bauteilen bestimmt wird.

## Claims

1. Method for determining the pressure (p) in the exhaust system (2) of an internal combustion engine (1), wherein a first lambda probe (3) and a second lambda probe (4) are arranged in the exhaust system (2), wherein the pressure (p) in the exhaust system (2) is determined in dependence on the signal (L₁) of the first lambda probe (3) and the signal (L₂) of the second lambda probe (4), wherein the first lambda probe (3) is a broadband lambda probe, and the second lambda probe (4) is a voltage step lambda probe.

2. Method according to Patent Claim 1, wherein the signal (L₁) of the first lambda probe (3) corresponds to a pumping current (Iₚ) or is formed as a function thereof, and the signal (L₂) of the second lambda probe (4) corresponds to a voltage (Uₛ) between two electrodes or is formed as a function thereof.

3. Method according to Patent Claims 1 or 2, wherein in order to determine the pressure (p) in the exhaust system (2) when an internal combustion engine (1) is operating during a use phase of the internal combustion engine (1) which follows a development phase of the internal combustion engine (1), the pressure (p) in the exhaust system (2) is varied in the development phase of the internal combustion engine (1) and the signal (L₁) of the first lambda probe (3) and the signal (L₂) of the second lambda probe (4) are determined, with the result that a functional relationship is available between the pressure (p) in the exhaust system (2), the signal (L₁) of the first lambda probe (3) and the signal (L₂) of the second lambda probe (4), and in the use phase the pressure (p) in the exhaust system (2) is determined in dependence on this functional relationship on the basis of a determination of the signal (L₁) of the first lambda probe (3) and the signal (L₂) of the second lambda probe (4).

4. Method according to Patent Claim 3, wherein in the development phase of the internal combustion engine (1), in addition to the variation of the pressure (p) in the exhaust system (2) and the determination of the signal (L₁) of the first lambda probe (3) and the signal (L₂) of the second lambda probe (4), the combustion air ratio (λ) of the exhaust gas is varied, with the result that lines of the same pressure (pₙ) which represent the relationship between the signal (L₁) of the first lambda probe (3) and the signal (L₂) of the second lambda probe (4) as well as the pressure (p) of the exhaust gas in the exhaust system (2) at various combustion air ratios (λₙ) are available, and in the use phase of the internal combustion engine (1) a pressure value (p) of the exhaust gas is determined on the basis of the lines of the same pressure (pₙ), even if the actual combustion air ratio (λ) is not known, and on the basis of a determination of the signal (L₁) of the first lambda probe (3) and the signal (L₂) of the second lambda probe (4) .

5. Method according to Patent Claims 1 to 4, wherein the first lambda probe (3) is arranged comparatively near to the internal combustion engine (1) in the exhaust system (2) and the second lambda probe (4) is arranged comparatively far from the internal combustion engine (1) in the exhaust system (2).

6. Method according to Patent Claims 1 to 5, wherein if at least one catalytic converter and/or at least one exhaust gas turbine and/or at least one particle filter are arranged in the exhaust system (2), downstream of the first lambda probe (3) and downstream of the second lambda probe (4), the pressure (p) in the exhaust system (2) upstream of the respective component/respective components is determined.

7. Method according to Patent Claims 1 to 5, wherein if at least one catalytic converter and/or at least one exhaust gas turbine and/or at least one particle filter are arranged in the exhaust system (2) upstream of the first lambda probe (3) and upstream of a second lambda probe (4), the pressure (p) in the exhaust system (2) downstream of the respective component/respective components is determined.

8. Method according to Patent Claims 1 to 5, wherein if at least one catalytic converter and/or at least one exhaust gas turbine and/or at least one particle filter are arranged in the exhaust system (2) downstream of the first lambda probe (3) and upstream of the second lambda probe (4), the pressure (p) in the exhaust system (2) across the respective component/respective components is determined.

## Revendications

1. Procédé de détermination de la pression (p) dans le système d'échappement (2) d'un moteur à combustion interne (1), une première sonde lambda (3) et une deuxième sonde lambda (4) étant disposées dans le système d'échappement (2), la pression (p) dans le système d'échappement (2) étant déterminée en fonction du signal (L₁) de la première sonde lambda (3) et du signal (L₂) de la deuxième sonde lambda (4), la première sonde lambda (3) étant une sonde lambda à large bande et la deuxième sonde lambda (4) une sonde lambda à saut de tension.

2. Procédé selon la revendication 1, le signal (L₁) de la première sonde lambda (3) correspondant à un courant de pompe (Iₚ) ou étant formé en fonction de celui-ci et le signal (L₂) de la deuxième sonde lambda (4) correspondant à une tension (Uₛ) entre deux électrodes ou étant formé en fonction de celle-ci.

3. Procédé selon la revendication 1 ou 2, selon lequel, pour la détermination de la pression (p) dans le système d'échappement (2) lors du fonctionnement d'un moteur à combustion interne (1) pendant une phase d'utilisation du moteur à combustion interne (1), laquelle s'enchaîne à une phase de développement du moteur à combustion interne (1), une variation de la pression (p) dans le système d'échappement (2) est effectuée dans la phase de développement du moteur à combustion interne (1) ainsi qu'une détermination du signal (L₁) de la première sonde lambda (3) et du signal (L₂) de la deuxième sonde lambda (4), de sorte qu'il existe une relation fonctionnelle entre la pression (p) dans le système d'échappement (2), le signal (L₁) de la première sonde lambda (3) et le signal (L₂) de la deuxième sonde lambda (4) et, dans la phase d'utilisation, la pression (p) dans le système d'échappement (2) est déterminée en fonction de cette relation fonctionnelle au moyen d'une détermination du signal (L₁) de la première sonde lambda (3) et du signal (L₂) de la deuxième sonde lambda (4).

4. Procédé selon la revendication 3, selon lequel, dans la phase de développement du moteur à combustion interne (1), en plus de la variation de la pression (p) dans le système d'échappement (2) ainsi que de la détermination du signal (L₁) de la première sonde lambda (3) et du signal (L₂) de la deuxième sonde lambda (4), une variation du taux d'air de combustion (λ) dans le gaz d'échappement est effectuée, de manière à disposer de lignes de pression égale (pₙ) qui représentent la relation entre le signal (L₁) de la première sonde lambda (3) et le signal (L₂) de la deuxième sonde lambda (4) ainsi que la pression (p) du gaz d'échappement dans le système d'échappement (2) à différents taux d'air de combustion (λₙ) et, dans la phase d'utilisation du moteur à combustion interne (1), une valeur de la pression (p) du gaz d'échappement est déterminée au moyen des lignes de pression égale (pₙ), même lorsque le taux d'air de combustion (λ) effectif n'est pas connu, ainsi qu'au moyen de la détermination du signal (L₁) de la première sonde lambda (3) et du signal (L₂) de la deuxième sonde lambda (4).

5. Procédé selon la revendication 1 à 4, la première sonde lambda (3) étant disposée relativement proche du moteur à combustion interne (1) dans le système d'échappement (2) et la deuxième sonde lambda (4) relativement loin du moteur à combustion interne (1) dans le système d'échappement (2).

6. Procédé selon la revendication 1 à 5, selon lequel, lorsqu'au moins un catalyseur et/ou au moins une turbine à gaz d'échappement et/ou au moins un filtre à particules sont disposés dans le système d'échappement (2) en aval de la première sonde lambda (3) et en aval de la deuxième sonde lambda (4), la pression (p) dans le système d'échappement (2) est déterminée en amont de l'élément structural respectif / des éléments structuraux respectifs.

7. Procédé selon la revendication 1 à 5, selon lequel, lorsqu'au moins un catalyseur et/ou au moins une turbine à gaz d'échappement et/ou au moins un filtre à particules sont disposés dans le système d'échappement (2) en amont de la première sonde lambda (3) et en amont de la deuxième sonde lambda (4), la pression (p) dans le système d'échappement (2) est déterminée en aval de l'élément structural respectif / des éléments structuraux respectifs.

8. Procédé selon la revendication 1 à 5, selon lequel, lorsqu'au moins un catalyseur et/ou au moins une turbine à gaz d'échappement et/ou au moins un filtre à particules sont disposés dans le système d'échappement (2) en aval de la première sonde lambda (3) et en amont de la deuxième sonde lambda (4), la pression (p) dans le système d'échappement (2) est déterminée de part et d'autre de l'élément structural respectif / des éléments structuraux respectifs.
